# EUROPÄISCHE PATENTSCHRIFT

(11) **EP 3 321 228 B1**
(45) Veröffentlichungstag und Bekanntmachung des Hinweises auf die Patenterteilung: **13.03.2019**
(21) Anmeldenummer: 17201319.5
(22) Anmeldetag: 13.11.2017
(51) Int. Cl.: B66F 9/075, B66F 9/08, B60Q 1/26, F21S 4/24

(54) **FLURFÖRDERZEUG MIT BLENDARMEN UND SCHATTENWURF VERMEIDENDEN LEUCHTMITTELN**
INDUSTRIAL TRUCK WITH ILLUMINATING MEANS WHICH REDUCE BLINDING AND PREVENT CASTING OF SHADOWS
CHARIOT DE MANUTENTION POURVU DE MOYEN LUMINEUX PEU AVEUGLANT ET ÉVITANT LA PROJECTION D'OMBRE

(30) Priorität: 14.11.2016 DE 102016222270
(43) Veröffentlichungstag der Anmeldung: 16.05.2018
(73) Patentinhaber: Jungheinrich Aktiengesellschaft, 22047 Hamburg (DE)
(72) Erfinder: Weck, Michael, 85368 Moosburg (DE)
(74) Vertreter: Weickmann & Weickmann PartmbB

(56) Entgegenhaltungen:
- WO-A1-2016/001669
- AU-A4- 2014 100 022
- DE-A1-102012 006 333
- DE-A1-102016 103 537
- JP-A- 2003 221 199

## Beschreibung

Die vorliegende Erfindung betrifft ein Flurförderzeug mit einem an mindestens einem Mast angeordneten höhenverstellbaren Aufnahmemittel, das zwischen einer untersten und einer obersten Lastposition verfahrbar ist, und einem Fahrersitz oder einer Fahrerposition für einen Fahrer des Flurförderzeugs, wobei mindestens ein Leuchtmittel an dem mindestens einem Mast angeordnet ist, wobei das Leuchtmittel ein streifenförmiges Leuchtmittel ist, das an einer vom Fahrersitz oder von der Fahrerposition abgewandten und insbesondere senkrecht verlaufenden Leuchtmittelfläche des mindestens einen Mastes angeordnet ist.

Hierbei ist unter einer Fahrerposition ein Teil des Flurförderzeugs gemeint, das dafür ausgelegt ist, dass sich ein Fahrer während des Bedienens und der Fahrt dort aufhält üblicherweise mit Zugriffsmöglichkeit auf verschiedene Bedienelemente zur Steuerung. Insoweit der Begriff Fahrersitz im Folgenden verwendet wird sind damit auch immer solche Fahrerpositionen gemeint, insbesondere auch solche, bei denen kein Sitz vorhanden ist und der Fahrer eine andere Position einnimmt, z.B. steht.

Als Leuchtmittel werden bei Flurförderzeugen üblicherweise Arbeitsscheinwerfer verwendet. Diese sind teils am Schutzdach des Flurförderzeugs, teils am übrigen Gehäuse des Flurförderzeugs und teils am Mast angeordnet.

Bei ersteren beiden Lösungen ist nachteilig, dass sich blendende Reflexionen am Mast ergeben können, nur ein fixes Leuchtbild erzielt wird und keine Beleuchtung des Bereichs vor den Gabeln des Aufnahmemittels erzielt wird, wenn diese beispielsweise hochgestellt sind um einen hohen Regalplatz zu erreichen, womit allgemein die Sichtverhältnisse schlecht und damit die Risiken von Bedienungsfehlern und daraus folgenden Kollision hoch sind.

Bei Anordnung am Mast wird zwar das Problem von blendenden Reflexionen am Mast verbieten jedoch ist dieser Montageplatz einerseits exponiert, womit ein erhöhtes Risiko für eine Beschädigung der Scheinwerfer besteht und andererseits wird wieder nur ein festes Leuchtbild erzielt, das nur für bestimmte Höheneinstellungen der Gabel den für die Arbeit relevanten Bereich ausleuchtet.

Eine Weiterbildung ist hierbei, adaptive Arbeitsscheinwerfer vorzusehen, deren Ausrichtung verstellt werden kann bzw. sich automatisch verstellt. Diese sind aufgrund des erforderlichen Motors bzw. der erforderlichen Mechanik und der Ansteuerung zum Verstellen im Allgemeinen nur am Schutzdach oder dem restlichen Fahrzeuggehäuse angebracht. Damit verbleibt immer noch das Problem von blendenden Reflexionen am Mast und unbeleuchteter Bereiche vor dem Mast, während gleichzeitig die Kosten erheblich erhöht sind, insbesondere da entsprechende Sensoren, Batterien und Zusatzmotoren oder andere Mittel zum geeigneten Einstellen der Scheinwerfer erforderlich sind.

Allen diesen Lösungen ist aber noch ferner der Nachteil zu eigen, dass keine Ausleuchtung erreicht wird, wenn die Last sich unmittelbar vor den Scheinwerfern befindet und von Form und Größe her einen entsprechenden Schatten ergibt. Ferner ist grundsätzlich bei entsprechenden Lasten mit ausreichend reflektierender Oberfläche eine blendende Reflexion an der Last unvermeidlich.

Aus der DE 10 2012 006 333 A1 ist ein Flurförderzeug bekannt, bei dem Leuchtmittel am Lastaufnahmemittel bzw. an den Gabeln angeordnet sind. Dabei ist vorgesehen, dass die Lichtintensität in Abhängigkeit von der Hubhöhe des Lastaufnahmemittels variiert wird. Das Vorsehen der Leuchtmittel am Lastaufnahmemittel stellt zwar einerseits sicher, dass die Leuchtmittel im Allgemeinen auf den Bereich leuchten, auf den die Gabeln gerade gerichtet sind. Jedoch ist einerseits das Risiko einer Beschädigung erheblich größer, da die Leuchtmittel gerade in der Nähe von der Position angeordnet sind, an der schwere und teilweise auch unförmige Lasten transportiert werden. Andererseits ist die Problematik einer mangelnden Ausleuchtung aufgrund von Form und Größe der Last durch Anordnung der Leuchtmittel am Lastaufnahmemittel eher noch erhöht.

Aus der DE 10 2016 103 537 A1 ist ein Flurförderzeug entsprechend dem Oberbegriff des Anspruchs 1 bekannt. Bei diesem tritt allerdings auch das Problem auf, dass bei bestimmten Lasten es zu einer Blendwirkung an der Last selber kommt, da sich das Leuchtmittel entlang der gesamten Masthöhe erstreckt, und gleichzeitig die Last einen Schatten wirft.

Aufgabe der vorliegenden Erfindung ist es vor diesem Hintergrund ein Flurförderzeug mit Leuchtmitteln anzugeben, wobei die aus dem Stand der Technik bekannten Nachteile reduziert oder vermieden sind. Insbesondere soll eine starke Blendung, Reflexionen am Mast oder der Last und insbesondere Schatten im Arbeitsbereich aufgrund von Mast oder Last reduziert oder vermieden werden.

Diese Aufgabe wird gelöst durch ein Flurförderzeug gemäß Anspruch 1. Vorteilhafte Ausgestaltungen sind Gegenstand der abhängigen Ansprüche.

Das erfindungsgemäße Flurförderzeug mit einem an mindestens einem Mast angeordneten höhenverstellbaren Aufnahmemittel, das zwischen einer untersten und einer obersten Lastposition verfahrbar ist, und einem Fahrersitz für einen Fahrer des Flurförderzeugs, wobei mindestens ein Leuchtmittel an dem mindestens einem Mast angeordnet ist, wobei das Leuchtmittel ein streifenförmiges Leuchtmittel ist, dass an einer vom Fahrersitz abgewandten und insbesondere senkrecht verlaufenden Leuchtmittelfläche des mindestens einen Mastes angeordnet ist, zeichnet sich dadurch aus, dass das Flurförderzeug eine Steuerung zur Ansteuerung des Leuchtmittels aufweist, die ausgelegt ist, dass sie nur bestimmte Bereiche des Leuchtmittels leuchten lässt und die Bereiche nicht leuchten lässt, deren Licht vom Aufnahmemittel oder der Last verdeckt würden.

Damit sind Schatten im Arbeitsbereich aufgrund der Last reduziert, denn aufgrund der streifenförmigen Ausbildung des Leuchtmittels wird die Last im Allgemeinen nur einen Teil des Leuchtmittels abdecken, womit ein anderer Teil des Leuchtmittels noch an der Last vorbei den Arbeitsbereich erhellen kann. Gleichzeitig strahlt das Leuchtmittel den Mast selber nicht an, wodurch dort keine Reflexionen auftreten können. Ferner kann ein streifenförmiges Leuchtmittel so ausgebildet sein, dass es nur wenig vom Mast absteht, womit eine Beschädigung durch die Bewegung der Last unwahrscheinlich ist. Ferner gibt es nur wenig Reflexionen und Schatten durch das unmittelbare Anleuchten der Last.

Vorteilhaft kann das streifenförmige Leuchtmittel insbesondere durch einen oder mehrere Leuchdioden(LED)-Streifen ausgebildet sein. LED-Streifen erzeugen einerseits genug Helligkeit und benötigen andererseits nur wenig Energie und können vor allem sehr flach ausgebildet sein, womit eine Beschädigung durch Stöße nahezu ausgeschlossen ist.

Bevorzugt erstreckt sich das Leuchtmittel streifenförmig von einem unteren zu einem oberen Bereich des mindestens einen Mastes so, dass in wenigstens einer Zwischenlastposition zwischen unterster und oberster Lastposition Abschnitte des Leuchtmittels sowohl oberhalb als auch unterhalb des Aufnahmemittels sind. Mit anderen Worten ist das streifenförmige Leuchtmittel von solcher Länge, dass es sich über und unter das Aufnahmemittel erstrecken kann. Dies bietet den Vorteil, dass es eigentlich keine Position des Aufnahmemittels gibt, bei der nicht wenigstens entweder unterhalb oder oberhalb des Aufnahmemittels Licht von dem streifenförmigen Leuchtmittel vorbeistrahlt. Dadurch ist das streifenförmige Leuchtmittel eigentlich in keiner Position vollständig durch das Aufnahmemittel und eine darauf befindliche Last abgedeckt, womit der Arbeitsbereich vor dem Flurförderzeug zumindest nicht vollständig beschattet ist.

Insbesondere kann sich das Leuchtmittel so erstrecken, dass in der untersten Lastposition Abschnitte des Leuchtmittels unterhalb des Aufnahmemittels sind und/oder das in der obersten Lastposition Abschnitte des Leuchtmittels oberhalb des Aufnahmemittels sind. Da im Allgemeinen mit einem Flurförderzeug nur Lasten transportiert werden, die sich nur begrenzt oder auch gar nicht unterhalb bzw. oberhalb des Aufnahmemittels erstrecken (häufig verwendet sind Paletten, die sich nur wenig unter das Aufnahmemittel erstrecken) kann durch eine solche Ausbildung des Leuchtmittels sichergestellt werden, dass unabhängig von der sonstigen Größe der Last immer ein Teil des Leuchtmittels noch den vor dem Flurförderzeug liegenden Arbeitsbereich beleuchten kann. Dadurch wird eine vollständige Beschattung durch die Last ausgeschlossen.

Vorteilhafterweise erstreckt sich das Leuchtmittel so, dass in jeder Lastposition Abschnitte des Leuchtmittels entweder mindestens unterhalb oder mindestens oberhalb des Aufnahmemittels sind. Oder in anderen Worten, dass es keine Lastposition gibt, bei der nicht wenigstens entweder Abschnitte oberhalb oder unterhalb des Aufnahmemittels sind. Dadurch kann ebenfalls sichergestellt werden, dass immer ein Teil des Leuchtmittels noch den vordem Flurförderzeug liegenden Arbeitsbereich beleuchten kann.

Falls bei konkreten Anwendungen Form und Größe der üblichen zu transportierenden Last bekannt sind, kann sich das Leuchtmittel vorteilhafterweise so erstrecken, dass in wenigstens einer Zwischenlastposition zwischen unterster und oberster Lastposition Abschnitte des Leuchtmittels sowohl oberhalb als auch unterhalb einer solchen üblichen Last sind. Damit ist für jede Lastposition eine gute Ausleuchtung durch die sowohl oberhalb als auch unterhalb der Last erfolgende Beleuchtung erzielt.

Alternativ oder zusätzlich kann sich das Leuchtmittel so erstrecken, dass in der untersten Lastposition Abschnitte des Leuchtmittels unterhalb der üblichen Last sind und/oder dass in der obersten Lastposition Abschnitte des Leuchtmittels oberhalb der üblichen Last sind. Dadurch ist sichergestellt, dass entsprechend wenigstens unterhalb bzw. oberhalb der Last eine Ausleuchtung des Bereichs vor dem Flurförderzeug erfolgt.

Besonders vorteilhaft kann das Leuchtmittel so ausgebildet sein, dass in jeder Lastposition Abschnitte des Leuchtmittels entweder mindestens unterhalb oder mindestens oberhalb einer üblichen Last sind. Damit ist in jeder Lastposition eine wenigstens teilweise Ausleuchtung des Bereichs vor dem Flurförderzeug, also des Arbeitsbereichs, sichergestellt.

In einer Ausführungsform umfasst der mindestens eine Mast des erfindungsgemäße Flurförderzeug ein feststehendes Mastprofil, mit dem das Aufnahmemittel verbunden ist, wobei das Leuchtmittel an dem feststehenden Mastprofil angeordnet ist. Dabei ist unter anderem eine Anordnung des Leuchtmittels an einer der Außenseite als auch an einer der Mittelachse des Fahrzeugs zugewandten Fläche des feststehenden Mastprofils denkbar. Ebenfalls ist eine Anordnung an einer nach vorne gerichteten Fläche des Mastprofils denkbar. Ferner kann auch eine Nut, Ausnehmung oder ähnliches an einer der Flächen des Mastprofils vorgesehen sein, in der Teile des Leuchtmittels oder das ganze Leuchtmittel angeordnet werden.

Bevorzugt umfasst jedoch der mindestens eine Mast des erfindungsgemäßen Flurförderzeugs ein feststehendes Mastprofil und ein bewegliches Mastprofil. Dabei ist das Aufnahmemittel mit dem beweglichen Mastprofil verbunden, wobei das bewegliche Mastprofil relativ zu dem feststehenden Mastprofil in senkrechter Richtung beweglich ist, wobei das Leuchtmittel an dem beweglichen Mastprofil angeordnet ist. Dadurch ist sichergestellt, dass insbesondere die Bereiche vor dem Flurförderzeug in etwa der Höhe der Last ausgeleuchtet sind auch wenn beispielsweise ein besonders hoher Regalplatz angefahren wird. Dies erhöht die Sicherheit erheblich, da der Fahrer insbesondere in diesem Bereich Hindernisse und Strukturen erkennen können muss.

Bevorzugt ist dabei das feststehende Mastprofil bezogen auf das Flurförderzeug weiter außen angeordnet als das bewegliche Mastprofil. Damit ist ebenfalls das am beweglichen Mastprofil angebrachte Leuchtmittel innen bzw. abgewandt bzw. beabstandet von der Außenseite des Fahrzeugs angeordnet, wodurch die Gefahr einer Beschädigung reduziert ist.

Vorteilhafterweise ist die Leuchtmittelfläche eine dem feststehenden Mastprofil zugewandte Fläche des beweglichen Mastprofils. Damit ist das Leuchtmittel wenigstens in zwei Richtungen durch das feststehende Mastprofil und das bewegliche Mastprofil gegen Einwirkungen von außen wie beispielsweise Stöße bei Kollision geschützt.

Es kann aber auch vorgesehen sein, dass das Leuchtmittel sich an der inneren und somit der der Mittelachse des Fahrzeugs zugewandten Fläche des beweglichen Mastprofils angeordnet ist. Ebenfalls ist eine Anordnung an einer nach vorne gerichteten Fläche des Mastprofils denkbar. Ferner kann auch eine Nut, Ausnehmung oder ähnliches an einer der Flächen des Mastprofils vorgesehen sein, in der Teile des Leuchtmittels oder das ganze Leuchtmittel angeordnet werden.

Vorteilhafterweise weist das streifenförmige Leuchtmittel eine Erstreckung in einer Längsrichtung längs einer Länge auf, die erheblich größer ist als die hierzu orthogonale Breite des Leuchtmittels. Dadurch wird die Größe des Leuchtmittels und somit der konstruktive und finanzielle Aufwand gering gehalten, während gleichzeitig die besonderen Vorteile der Erfindung immer noch realisierbar sind, insbesondere da eine größere Länge die Gefahr einer vollständigen Verdeckung durch eine aufgenommene Last reduziert.

Dabei verläuft die Längsrichtung des Leuchtmittels im Wesentlichen und bevorzugt vollständig parallel zu dem mindestens einen Mast, an dem das Leuchtmittel angeordnet ist. Damit erzielt das als Streifen ausgebildete Leuchtmittel eine optimale Wirkung hinsichtlich einer Beleuchtung möglichst unterhalb und oberhalb an der Last vorbei.

Insbesondere kann das Leuchtmittel auch im Wesentlichen und bevorzugt vollständig parallel zu dem Mastprofil ausgebildet sein, an dem das Leuchtmittel angeordnet ist.

In einer besonders bevorzugten Ausführungsform erstreckt sich das streifenförmige Leuchtmittel nahezu vollständig oder vollständig von einem unteren Ende des Mastes bzw. des entsprechenden Mastprofils zu einem oberen Ende des Mastes bzw. des entsprechenden Mastprofils.

In einer damit kombinierbaren Ausführungsform kann die Länge der Längsrichtung des streifenförmigen Leuchtmittels gleich oder nahezu gleich der Länge des Mastes bzw. des Mastprofils sein. Das Leuchtmittel kann bei bestimmter Anwendung allerdings auch länger ausgebildet sein, so dass es sich möglicherweise auch an die Oberseite oder Unterseite des Mastes bzw. des Mastprofils erstreckt, um eine zusätzliche Beleuchtung nach oben und/oder unten zu erzielen. Bei anderen Anwendungen kann die Länge auch nur die Hälfte oder mehr als die Hälfte der Länge des Mastes bzw. Mastprofils betragen.

Das erfindungsgemäße Flurförderzeug umfasst die Steuerung zur Ansteuerung des Leuchtmittels, die so ausgelegt ist, dass sie nur bestimmte Bereiche des Leuchtmittels leuchten lässt und insbesondere die Bereiche nicht leuchten lässt, deren Licht vom Aufnahmemittel oder der Last ohnehin verdeckt würde. Somit ist die Steuerung ausgelegt, das bzw. die Leuchtmittel so anzusteuern, dass die Leuchtmittel in Bereichen nicht leuchten, von denen ausgehend das Licht vom Aufnahmemittel oder der Last verdeckt würde, während die übrigen Bereiche leuchten.

Denn einerseits würde dieses Licht nicht den Arbeitsbereich erhellen und könnte andererseits eine Blendwirkung durch Reflexion an der Last zur Folge haben. Insbesondere LED-Streifen können in dieser Weise angesteuert werden.

Die Steuerung ist besonders bevorzugt so ausgelegt, das Leuchtmittel so anzusteuern, dass dieses nicht in einer Höhe bzw. in einem Bereich leuchtet, der der aktuellen Höhe des Aufnahmemittels und einem üblichen Lasthöhen entsprechenden Bereich darüber entspricht.

Unter einer üblichen Lasthöhe ist dabei bevorzugt eine Höhe zu verstehen, die der maximalen Höhe von Lagerplätzen eines Lagers entspricht, in dem das Flurförderzeug eingesetzt wird. Ebenfalls bevorzugt ist alternativ oder zusätzlich darunter die maximale Höhe von Lasten zu verstehen, die bei der für das Flurförderzeug vorgesehenen Anwendung zu erwarten ist. Ferner kann darunter eine Höhe verstanden werden, die mindestens größer ist als die Höhe der meisten, der Mehrheit, von 50%, von 75% und/oder von 90% der für die beabsichtige Anwendung des Flurförderzeugs zu erwartenden Lasten.

Unter Bezugnahme auf die Figuren wird nachstehend ein Ausführungsbeispiel der Erfindung mit einer bestimmten Merkmalskombination dargestellt. Die Erfindung ist jedoch nicht auf dieses Ausführungsbeispiel beschränkt.
Figur 1 zeigt eine schematische seitliche Ansicht eines Ausführungsbeispiels eines erfindungsgemäßen Flurförderzeugs.
Figur 2a zeigt eine schematische Ansicht des Flurförderzeugs aus Figur 1 entgegen der Fahrtrichtung und Figur 2b zeigt eine seitliche Ansicht des Lastaufnahmebereichs des Ausführungsbeispiels des erfindungsgemäßen Flurförderzeugs zur Verdeutlichung der ausgeleuchteten Bereiche.
Figuren 3a bis 5b zeigen den Figuren 2a und 2b entsprechende Ansichten mit jeweils anderer Höheneinstellung des Aufnahmemittels.

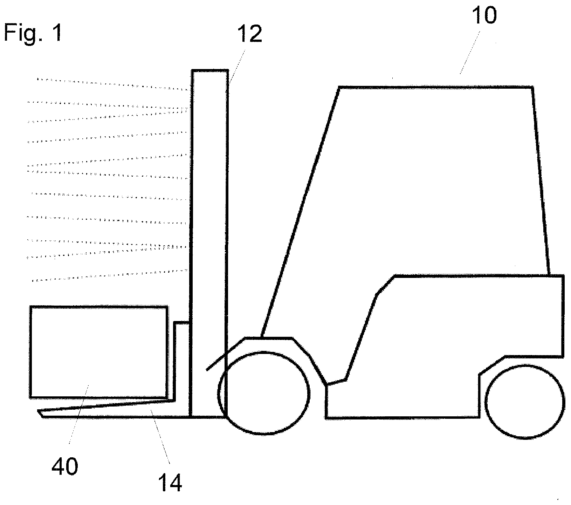

Wie aus den Figuren 1 bis 5a ersichtlich, umfasst das gezeigte Ausführungsbeispiel des erfindungsgemäßen Flurförderzeugs 10 zwei Masten 12 mit einem daran höhenverstellbar angeordneten Aufnahmemittel 14. Jeder Mast 12 umfasst eine senkrecht verlaufende Leuchtmittelfläche 18 an der jeweils ein streifenförmiges Leuchtmittel 16 angeordnet ist.

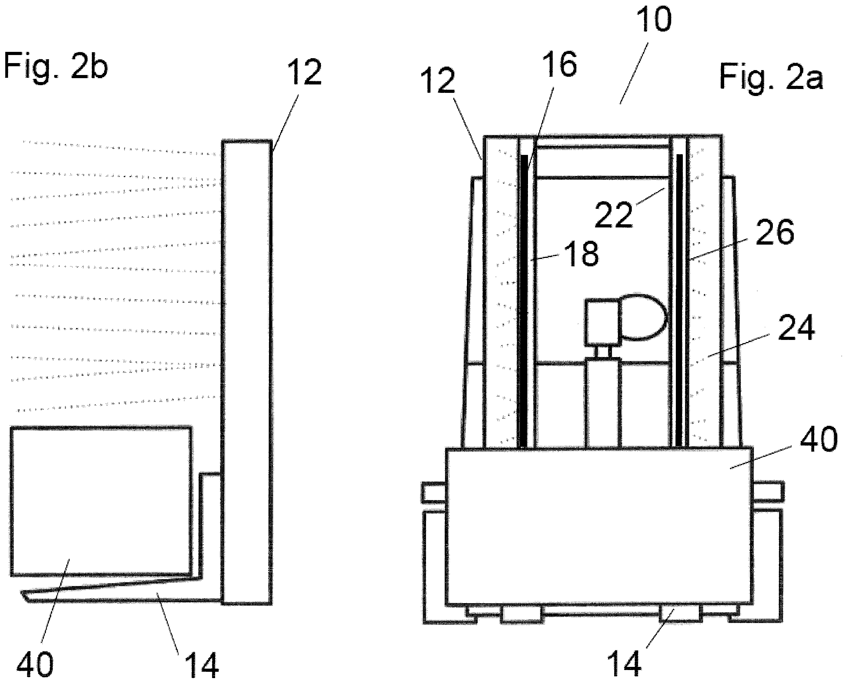

Die Masten 12 umfassen jeweils ein feststehendes Mastprofil 24 und ein bewegliches Mastprofil 26. Das Aufnahmemittel 14 ist dabei mit dem beweglichen Mastprofil 26 verbunden und kann gegenüber dem beweglichen Mastprofil 26 höhenverstellt werden. Gleichzeitig ist das bewegliche Mastprofil 26 gegenüber dem feststehenden Mastprofil 24 in der Höhe verstellbar und mit diesem verbunden. Dadurch kann das Aufnahmemittel 14 und damit eine von dem Lastaufnahmemittel 14 getragene Last 40 wie in den Figuren 2b bis 5b gezeigt auf verschiedene Höhen verbracht werden, beispielsweise um die Last 40 in einem hohen Regalplatz einzulagern.

Das Leuchtmittel 16 erstreckt sich dabei streifenförmig jeweils von einem unteren Bereich 20 von jedem Mast 12 bzw. von jedem beweglichen Mastprofil 26 zu einem oberen Bereich 22 des jeweiligen Mastes 12 bzw. beweglichen Mastprofils 26.

Dadurch ist sichergestellt, dass bei einer unteren Lastposition, wie beispielsweise in Figur 2a und 2b dargestellt, wenigstens Licht 50 oberhalb der Last in den Arbeitsbereich vor dem Flurförderzeug 10 gelangen kann.

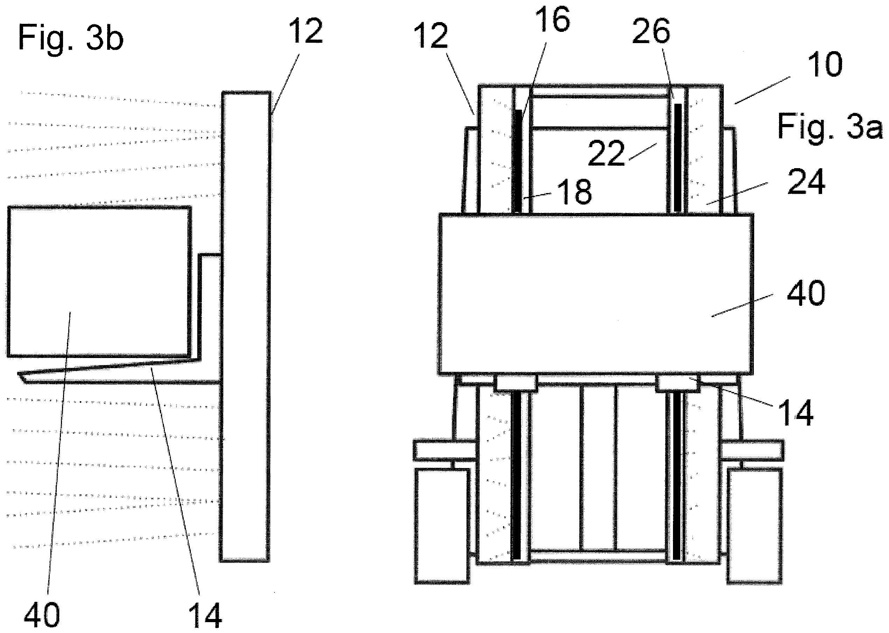

Auch bei einer mittleren Lastposition wie in Figuren 3a und 3b gezeigt, kann dann Licht 50 den Arbeitsbereich vor dem Flurförderzeug 10 erreichen, in diesem Fall wird ein Teil des Lichts 50 oberhalb des Aufnahmemittels 14 und der Last 40 entlang gestrahlt werden und ein anderer Teil unterhalb.

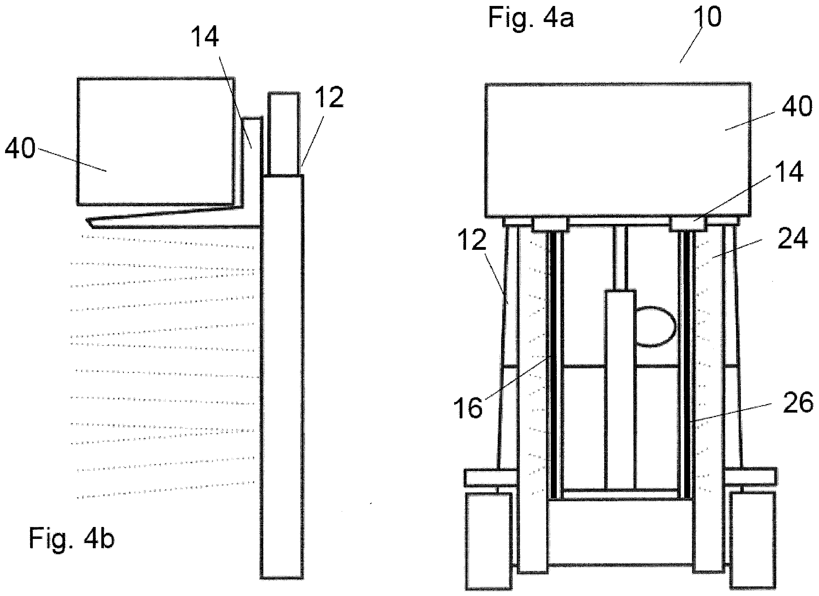

Bei einer hohen Position des Aufnahmemittels 14 in Bezug auf das bewegliche Lastprofil 26 wird, wie in den Figuren 4a und 4b gezeigt, ebenfalls ausreichend Licht 50 in den Arbeitsbereich vor dem Flurförderzeug 10 gestrahlt, nur in diesem Fall eben unterhalb des Aufnahmemittels 14.

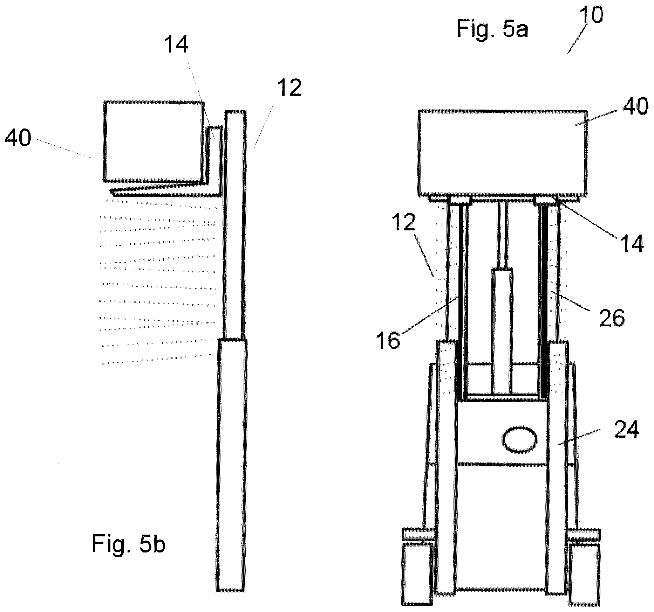

Aufgrund der Anordnung des Leuchtmittels 16 am beweglichen Mastprofil 26 wird auch bei maximalen Ausfahren des beweglichen Lastprofils 26, wie es in Figuren 5a und 5b gezeigt ist, der Arbeitsbereich ausreichend ausgeleuchtet, denn in dieser Position ist der entscheidende Bereich erheblich oberhalb des Flurförderzeugs 10 gelegen, nämlich eben im Bereich der Höhe des Aufnahmemittels 14. Da das Leuchtmittel 16 aufgrund der Anordnung am beweglichen Lastprofil 26 mit dem beweglichen Lastprofil 26 ebenfalls nach oben verfahren wurde, leuchtet es nunmehr diesen oberhalb und vor dem Flurförderzeug 10 liegenden Arbeitsbereich aus. Damit ist insbesondere auch eine passende Ausleuchtung bei Arbeiten in einem Hochregallager sichergestellt.

Wenn ausgehend von der Lastposition in den Figuren 5a und 5b nunmehr das Aufnahmemittel 14 gegenüber dem Mast 12 bzw. dem beweglichen Mastprofil 26 verfahren würde, würden sich ähnlich wie in den Figuren 2b bis 4b gezeigt entsprechende Beleuchtungssituationen ergeben, wodurch auch in diesen Fällen eine ausreichende Ausleuchtung sichergestellt wäre. Anzumerken ist, dass bei erfindungsgemäßen Flurförderzeugen 10 mit mehreren beweglichen Mastprofilen 26 bzw. einem teleskopisch ausgebildeten Mast 12 nicht nur an einem beweglichen Mastprofil 26 bzw. an einem Abschnitt des teleskopischen Mastes 12 ein Leuchtmittel 16 angeordnet sein kann. Sondern es können an verschiedenen Mastprofilen 26 bzw. Teleskopabschnitten streifenförmige Leuchtmittel 16 angeordnet werden, insbesondere auch so, dass bestimmte Leuchtmittel 16 nur bei bestimmten Lastpositionen bzw. Ausfahrzuständen überhaupt frei liegen und zur Beleuchtung des Arbeitsbereichs beitragen können.

Wie anhand der den Lichtweg des Lichts 50 symbolisierenden gestrichelten Linien in den Figuren 2b bis 5b angedeutet, ist eine Steuerung zur Ansteuerung des Leuchtmittels 16 so ausgelegt, dass das Leuchtmittel 16 beginnend mit einer Höhe, die dem unteren Rand des Aufnahmemittels 14 ungefähr entspricht, bis zu einer Höhe, die dem oberen Rand einer üblichen Last 40 ungefähr entspricht, nicht leuchtet und nur oberhalb und/oder unterhalb dieses Bereichs leuchtet und Licht 50 abgibt. Dies ist vorteilhaft um Reflexionen an der Last 40 zu vermeiden.

Es kann auch vorgesehen sein, dass ein solcher nicht leuchtender Bereich des Leuchtmittels 16 bzw. dessen Höhe manuell durch entsprechende Bedienelemente in der Nähe des Fahrersitzes einstellbar ist oder dass dieses dynamisch anhand verschiedener Parameter eingestellt wird, wie beispielsweise anhand des Signals von Lastsensoren oder anhand von Daten über die Last aus beispielsweise einer abzuarbeitenden Auftragsliste.

## Patentansprüche

1. Flurförderzeug (10) mit einem an mindestens einem Mast (12) angeordneten höhenverstellbaren Aufnahmemittel (14), das zwischen einer untersten und einer obersten Lastposition verfahrbar ist, und einem Fahrersitz oder einer Fahrerposition für einen Fahrer des Flurförderzeugs (10), wobei mindestens ein Leuchtmittel (16) an dem mindestens einem Mast (12) angeordnet ist, wobei das Leuchtmittel (16) ein streifenförmiges Leuchtmittel (16) ist, das an einer vom Fahrersitz oder von der Fahrerposition abgewandten und insbesondere senkrecht verlaufenden Leuchtmittelfläche (18) des mindestens einen Mastes (12) angeordnet ist, **dadurch gekennzeichnet, dass** das Flurförderzeug (10) eine Steuerung zur Ansteuerung des Leuchtmittels (16) aufweist, die ausgelegt ist, dass sie nur bestimmte Bereiche des Leuchtmittels leuchten lässt und die Bereiche nicht leuchten lässt, deren Licht vom Aufnahmemittel oder der Last verdeckt würde.

2. Flurförderzeug (10) nach Anspruch 1, **dadurch gekennzeichnet, dass** das streifenförmige Leuchtmittel (16) durch mindestens einen LED-Streifen ausgebildet ist.

3. Flurförderzeug (10) nach einem der vorhergehenden Ansprüche, **dadurch gekennzeichnet, dass** sich das Leuchtmittel (16) streifenförmig von einem unteren (20) zu einem oberen (22) Bereich des mindestens einen Mastes (12) so erstreckt, dass in wenigstens einer Zwischenlastposition zwischen unterster und oberster Lastposition Abschnitte des Leuchtmittels (16) sowohl oberhalb als auch unterhalb des Aufnahmemittels (14) sind.

4. Flurförderzeug (10) nach Anspruch 3, **dadurch gekennzeichnet, dass** sich das Leuchtmittel (16) so erstreckt, dass in der untersten Lastposition Abschnitte des Leuchtmittels (16) unterhalb des Aufnahmemittels (14) sind und/oder dass in der obersten Lastposition Abschnitte des Leuchtmittels (16) oberhalb des Aufnahmemittels (14) sind.

5. Flurförderzeug (10) nach Anspruch 3 oder 4, **dadurch gekennzeichnet, dass** sich das Leuchtmittel (16) so erstreckt, dass in jeder Lastposition Abschnitte des Leuchtmittels (16) entweder mindestens unterhalb oder mindestens oberhalb des Aufnahmemittels sind.

6. Flurförderzeug (10) nach Anspruch 3, 4 oder 5, **dadurch gekennzeichnet, dass** sich das Leuchtmittel (16) so erstreckt, dass für eine übliche mit dem Flurförderzeug (10) zu transportierende Last (40) in wenigstens einer Zwischenlastposition zwischen unterster und oberster Lastposition Abschnitte des Leuchtmittels (16) sowohl oberhalb als auch unterhalb der Last (40) sind und/oder dass in der untersten Lastposition Abschnitte des Leuchtmittels (16) unterhalb der Last (40) sind und/oder dass in der obersten Lastposition Abschnitte des Leuchtmittels (16) oberhalb der Last (40) sind und/oder dass in jeder Lastposition Abschnitte des Leuchtmittels (16) entweder mindestens unterhalb oder mindestens oberhalb der Last (40) sind.

7. Flurförderzeug (10) nach einem der vorhergehenden Ansprüche, **dadurch gekennzeichnet, dass** der mindestens eine Mast ein feststehendes Mastprofil umfasst, mit dem das Aufnahmemittel verbunden ist, wobei das Leuchtmittel an dem feststehenden Mastprofil angeordnet ist.

8. Flurförderzeug (10) nach einem der vorhergehenden Ansprüche, **dadurch gekennzeichnet, dass** der mindestens eine Mast (12) ein feststehendes (24) und ein bewegliches (26) Mastprofil umfasst, wobei das Aufnahmemittel (14) mit dem beweglichen Mastprofil (26) verbunden ist, wobei das bewegliche Mastprofil (26) relativ zu dem feststehenden Mastprofil (24) in senkrechter Richtung beweglich ist, wobei das Leuchtmittel (60) an dem beweglichen Mastprofil (26) angeordnet ist.

9. Flurförderzeug (10) nach Anspruch 8, **dadurch gekennzeichnet, dass** das feststehende Mastprofil (24) bezogen auf das Flurförderzeug weiter außen angeordnet ist als das bewegliche Mastprofil (26).

10. Flurförderzeug (10) nach Anspruch 8 oder 9, **dadurch gekennzeichnet, dass** die Leuchtmittelfläche (18) eine dem feststehenden Mastprofil (24) zugewandte Fläche des beweglichen Mastprofils (26) ist.

11. Flurförderzeug (10) nach einem der vorhergehenden Ansprüche, **dadurch gekennzeichnet, dass** das streifenförmige Leuchtmittel (16) eine Erstreckung in einer Längsrichtung längs einer Länge aufweist, die erheblich größer ist als die hierzu orthogonale Breite des Leuchtmittels (16).

12. Flurförderzeug (10) nach Anspruch 11, **dadurch gekennzeichnet, dass** die Längsrichtung des Leuchtmittels (16) im Wesentlichen und bevorzugt vollständig parallel zu dem Mast (12) verläuft, an dem das Leuchtmittel angeordnet ist.

13. Flurförderzeug (10) nach einem der vorhergehenden Ansprüche, **dadurch gekennzeichnet, dass** die Steuerung zur Ansteuerung des Leuchtmittels (16) ausgelegt ist, das Leuchtmittel so anzusteuern, dass dieses nicht in einer Höhe bzw. in einem Bereich leuchtet, der der aktuellen Höhe des Aufnahmemittels und einem üblichen Lasthöhen entsprechenden Bereich darüber entspricht.

14. Flurförderzeug (10) nach einem der vorhergehenden Ansprüche, **dadurch gekennzeichnet, dass** die nicht leuchtenden Bereiche anhand von Daten über die Last bestimmt sind.

15. Flurförderzeug (10) nach Anspruch 14, **dadurch gekennzeichnet, dass** die Daten über die Last Signale von Lastsensoren sind und/oder aus einer abzuarbeitenden Auftragsliste sind.

16. Flurförderzeug (10) nach einem der vorhergehenden Ansprüche, **dadurch gekennzeichnet, dass** der nicht leuchtende Bereich manuell einstellbar ist.

## Claims

1. Industrial truck (10) comprising a height-adjustable load-receiving means (14), which is arranged on at least one mast (12) and can be moved between a lowermost and an uppermost load position, and comprising a driver's seat or a driver's position for a driver of the industrial truck (10), at least one illuminating means (16) being arranged on the at least one mast (12), the illuminating means (16) being a strip-shaped illuminating means (16) that is arranged on an illuminating-means surface (18) of the at least one mast (12), which surface faces away from the driver's seat or driver's position and extends in particular vertically, **characterised in that** the industrial truck (10) comprises a controller for controlling the illuminating means (16), which controller is designed such that it allows only certain regions of the illuminating means to illuminate and does not allow illumination of the regions of which the light would be covered by the load-receiving means or the load.

2. Industrial truck (10) according to claim 1, **characterised in that** the strip-shaped illuminating means (16) is formed by at least one LED strip.

3. Industrial truck (10) according to either of the preceding claims, **characterised in that** the illuminating means (16) extends in the form of a strip from a lower (20) region to an upper (22) region of the at least one mast (12) such that, in at least one intermediate load position between the lowermost and uppermost load position, portions of the illuminating means (16) are both above and below the load-receiving means (14).

4. Industrial truck (10) according to claim 3, **characterised in that** the illuminating means (16) extends such that, in the lowermost load position, portions of the illuminating means (16) are below the load-receiving means (14) and/or such that, in the uppermost load position, portions of the illuminating means (16) are above the load-receiving means (14).

5. Industrial truck (10) according to either claim 3 or claim 4, **characterised in that** the illuminating means (16) extends such that, in each load position, portions of the illuminating means (16) are either at least below or at least above the load-receiving means.

6. Industrial truck (10) according to claim 3, claim 4 or claim 5, **characterised in that** the illuminating means (16) extends such that, for a conventional load (40) to be transported by the industrial truck (10), in at least one intermediate load position between the lowermost and the uppermost load position, portions of the illuminating means (16) are both above and below the load (40) and/or **in that**, in the lowermost load position, portions of the illuminating means (16) are below the load (40) and/or **in that**, in the uppermost load position, portions of the illuminating means (16) are above the load (40) and/or **in that**, in each load position, portions of the illuminating means (16) are either at least below or at least above the load (40).

7. Industrial truck (10) according to any of the preceding claims, **characterised in that** the at least one mast comprises a stationary mast profile which is connected to the load-receiving means, the illuminating means being arranged on the stationary mast profile.

8. Industrial truck (10) according to any of the preceding claims, **characterised in that** the at least one mast (12) comprises a stationary (24) mast profile and a movable (26) mast profile, the load-receiving means (14) being connected to the movable mast profile (26), the movable mast profile (26) being movable vertically relative to the stationary mast profile (24), the illuminating means (60) being arranged on the movable mast profile (26).

9. Industrial truck (10) according to claim 8, **characterised in that** the stationary mast profile (24) is arranged so as to be further out than the movable mast profile (26), with respect to the industrial truck.

10. Industrial truck (10) according to either claim 8 or claim 9, **characterised in that** the illuminating-means surface (18) is a surface of the movable mast profile (26), which surface faces the stationary mast profile (24).

11. Industrial truck (10) according to any of the preceding claims, **characterised in that** the strip-shaped illuminating means (16) has an extension in a longitudinal direction along a length that is significantly greater than the width of the illuminating means (16), which width is orthogonal to said length.

12. Industrial truck (10) according to claim 11, **characterised in that** the longitudinal direction of the illuminating means (16) extends substantially, and preferably completely, in parallel with the mast (12) on which the illuminating means is arranged.

13. Industrial truck (10) according to any of the preceding claims, **characterised in that** the controller for controlling the illuminating means (16) is designed so as to control the illuminating means such that said illuminating means does not illuminate at a height or in a region which corresponds to the current height of the load-receiving means and a region thereabove that corresponds to conventional load heights.

14. Industrial truck (10) according to any of the preceding claims, **characterised in that** the non-illuminating regions are determined on the basis of data regarding the load.

15. Industrial truck (10) according to claim 14, **characterised in that** the data regarding the load are signals from load sensors and/or are from a job list to be processed.

16. Industrial truck (10) according to any of the preceding claims, **characterised in that** the non-illuminating region can be manually set.

## Revendications

1. Chariot de manutention (10) avec un moyen de réception (14) réglable en hauteur agencé sur au moins un mât (12), qui peut être déplacé entre une position de charge inférieure et position de charge supérieure, et un siège de conducteur ou un poste de conduite pour un conducteur du chariot de manutention (10), dans lequel au moins un moyen lumineux (16) est agencé sur l'au moins un mât (12), dans lequel le moyen lumineux (16) est un moyen lumineux (16) en forme de bande, qui est agencé à une surface de moyen lumineux (18) de l'au moins un mât (12) dirigée à l'opposé, et en particulier s'étendant perpendiculairement, au siège du conducteur ou au poste de conduite, **caractérisé en ce que** le chariot de manutention (10) présente une commande pour la commande du moyen lumineux (16), qui est conçue pour qu'elle n'allume que des zones déterminées du moyen lumineux et n'allume pas les zones dont la lumière serait masquée par le moyen de réception ou la charge.

2. Chariot de manutention (10) selon la revendication 1, **caractérisé en ce que** le moyen lumineux (16) en forme de bande est réalisé par au moins une bande LED.

3. Chariot de manutention (10) selon l'une quelconque des revendications précédentes, **caractérisé en ce que** le moyen lumineux (16) s'étend en forme de bande d'une zone inférieure (20) à une zone supérieure (22) de l'au moins un mât (12) de sorte que dans au moins une position de charge intermédiaire entre la position de charge inférieure et supérieure, des sections du moyen lumineux (16) sont aussi bien au-dessus qu'en dessous du moyen de réception (14).

4. Chariot de manutention (10) selon la revendication 3, **caractérisé en ce que** le moyen lumineux (16) s'étend de sorte que dans la position de charge inférieure, des sections du moyen lumineux (16) sont en dessous du moyen de réception (14) et/ou que dans la position de charge supérieure, des sections du moyen lumineux (16) sont au-dessus du moyen de réception (14).

5. Chariot de manutention (10) selon la revendication 3 ou 4, **caractérisé en ce que** le moyen lumineux (16) s'étend de sorte que dans chaque position de charge, des sections du moyen lumineux (16) sont soit au moins au-dessous soit au moins au-dessus du moyen de réception.

6. Chariot de manutention (10) selon la revendication 3, 4 ou 5, **caractérisé en ce que** le moyen lumineux (16) s'étend de sorte que pour une charge (40) habituelle à transporter avec le chariot de manutention (10), dans au moins une position de charge intermédiaire entre la position de charge inférieure et supérieure, des sections du moyen lumineux (16) sont aussi bien au-dessus qu'en dessous de la charge (40) et/ou que dans la position de charge inférieure, des sections du moyen lumineux (16) sont en dessous de la charge (40) et/ou que dans la position de charge supérieure, des sections du moyen lumineux (16) sont au-dessus de la charge (40) et/ou que dans chaque position de charge, des sections du moyen lumineux (16) sont soit au moins au-dessous soit au moins au-dessus de la charge (40).

7. Chariot de manutention (10) selon l'une quelconque des revendications précédentes, **caractérisé en ce que** l'au moins un mât comprend un profil de mât fixe, auquel le moyen de réception est relié, dans lequel le moyen lumineux est agencé sur le profil de mât fixe.

8. Chariot de manutention (10) selon l'une quelconque des revendications précédentes, **caractérisé en ce que** l'au moins un mât (12) comprend un profil de mât fixe (24) et un profil de mât mobile (26), dans lequel le moyen de réception (14) est relié au profil de mât mobile (26), dans lequel le profil de mât mobile (26) est mobile dans une direction perpendiculaire au profil de mât fixe (24), dans lequel le moyen lumineux (60) est agencé sur le profil de mât mobile (26).

9. Chariot de manutention (10) selon la revendication 8, **caractérisé en ce que** le profil de mât fixe (24) est agencé par rapport au chariot de manutention plus à l'extérieur que le profil de mât mobile (26).

10. Chariot de manutention (10) selon la revendication 8 ou 9, **caractérisé en ce que** la surface de moyen lumineux (18) est une surface du profil de mât mobile (26) tournée vers le profil de mât fixe (24).

11. Chariot de manutention (10) selon l'une quelconque des revendications précédentes, **caractérisé en ce que** le moyen lumineux (16) en forme de bande présente une extension dans une direction longitudinale le long d'une longueur qui est significativement plus grande que la largeur orthogonale à celle-ci du moyen lumineux (16).

12. Chariot de manutention (10) selon la revendication 11, **caractérisé en ce que** la direction longitudinale du moyen lumineux (16) s'étend sensiblement et de préférence de manière complètement parallèle au mât (12), sur lequel le moyen lumineux est agencé.

13. Chariot de manutention (10) selon l'une quelconque des revendications précédentes, **caractérisé en ce que** la commande pour la commande du moyen lumineux (16), est conçue pour commander le moyen lumineux de sorte que celui-ci n'est pas allumé à une hauteur ou dans une zone qui correspond à la hauteur actuelle du moyen de réception et dans une zone correspondant à des hauteurs de charge habituelles.

14. Chariot de manutention (10) selon l'une quelconque des revendications précédentes, **caractérisé en ce que** les zones non allumées sont déterminées à l'aide de données sur la charge.

15. Chariot de manutention (10) selon la revendication 14, **caractérisé en ce que** les données sur la charge sont des signaux de capteurs de charge et/ou proviennent d'une liste d'ordres à traiter.

16. Chariot de manutention (10) selon l'une quelconque des revendications précédentes, **caractérisé en ce que** la zone non allumée est réglable manuellement.
